# EUROPEAN PATENT APPLICATION

(11) **EP 3 620 365 A1**
(43) Date of publication of application: **11.03.2020**
(21) Application number: 18192843.3
(22) Date of filing: 06.09.2018
(51) Int. Cl.: B63B 1/06, B63B 35/08, B63B 3/62

(54) **MERCHANT SHIP CAPABLE OF SAILING IN FROZEN SEA AREA AND OPERATION METHOD THEREOF**

(71) Applicant: Morimoto, Nobuyoshi, Tokyo 150-0035 (JP)
(72) Inventor: Morimoto, Nobuyoshi, Tokyo 150-0035 (JP)
(74) Representative: Held, Stephan

(57) **Abstract**

Provided is an operation method of a merchant ship having a high sailing energy efficiency in a frozen sea area.

A merchant ship includes a bulbous bow (13) which is provided in a bow part; a main propeller (11) which is provided in a stern part and driven by a main engine (12); an additional propeller (20) which is provided in a ship bottom part; and an additional-propeller-driving unit (22). The main propeller (11) and the additional propeller (20) are disposed so as to apply thrust forces when the merchant ship is in an unloaded state. The merchant ship has a draft line (18) with which a lower part of the bulbous bow (13) is located on a sea surface or an ice upper surface. The merchant ship (10) sails in a frozen sea area by using the main propeller (11) and the additional propeller (20).

## Description

### Technical Field

The present invention relates to a merchant ship capable of sailing in a frozen sea area and an operation method thereof.

### Background Art

In an area of the Arctic Ocean and sea areas adjacent thereto, it is difficult for a merchant ship to sail particularly in the winter season from October to March due to the influence of ice or the influence of an excessively low temperature in view of the structure or facility of the ship, safety in maneuvering the ship, safety of a crew, and safety of cargo. Only a warship, an observation ship, an ice breaker or the like having a special structure adapted to frozen seas can sail in these sea areas.

For example, even not in the Arctic Ocean area, in a sailing in a coastal sea area of the Baltic Sea, the Saint Lawrence River, an area of the Great Lakes, or a coastal sea area of Siberia in the Japan Sea, a ship hull or a steering propeller may be damaged by seas with floating ice and there is a risk of being locked of a ship in frozen seas under the influence of jammed ice or frozen thin ice.

Thus, the ice class is defined. Classes of PC1 to PC7 are indicated in IACS URI (Polar Class), and Classes of IA Super, IA, IB, IC, and II are indicated in FSICR (Finnish Swedish Ice Class Rules).

In a merchant ship, a bulbous bow is formed to reduce a wave-making resistance. For example, Patent Literature 1 describes a contrivance for a travel in frozen seas in this type of ship including a bulbous bow.

### Citation List

### Patent Literature

Patent Literature 1: WO 2015/092154 A

### Summary of Invention

### Technical Problem

Although Patent Literature 1 discloses no unit for obtaining a propulsion power for a ship, it is considered that the ship is propelled only by a common main propeller.

On the other hand, in order to safely sail in an early-stage frozen sea area, a normal sea area, a sea area with jammed floating ice, or a sea area with floating ice blocks by a main propeller and a diesel main engine for driving the main propeller in a common merchant ship at present, an application range of the diesel engine in the sailing area has to be excessively wide, which reduces a total energy efficiency (increases fuel consumption) and causes a problem in safety.

That is, in a common merchant ship, a capacity of a diesel main engine which drives the main propeller is determined on the assumption that the merchant ship sails at a relatively high speed in an ice-free sea area. Further, it is assumed that the merchant ship travels with an output of, for example, 85 to 90%MCR of the capacity in the entire sailing course.

In order to safely sail in a sea area with floating ice or a sea area with floating ice blocks only by the main propeller driven by the diesel main engine, it is necessary to operate the ship with an output of, for example, approximately 20 to 30%MCR of the capacity of the diesel main engine.

As a result, the diesel main engine is inevitably inefficiently used, which results in a critical problem for a merchant ship aimed at increase in a total energy efficiency (reduction in fuel consumption).

Further, in a sea area with floating ice or a sea area with floating ice blocks, it is necessary to sail at a low sailing speed. On the other hand, the main propeller is used on the assumption that the ship sails at a relatively high speed. Accordingly, if it is intended to sail in a sea area with floating ice or a sea area with floating ice blocks only by the main propeller, the main propeller is unsuitable for such a speed adjustment in a wide range, which causes problems. Further, there are many problems also in maneuvering the ship.

In view of the above, it is a principal object of the present invention to provide an operation method of a merchant ship that is capable of safely sailing in a frozen sea area and has a high total energy efficiency (low fuel consumption) without an energy efficiency loss in a normal sea area.

### Solution to Problem

Representative modes of the present invention that has solved the above problems are as follows.

The present invention is directed at a merchant ship. The present invention is applicable to a merchant ship, including a general cargo ship, a container ship, an oil tanker, a chemical tanker, an ore carrier, a coal ship, a liquefied natural gas carrier, a liquefied petroleum gas carrier, a car carrier, or a bulk carrier.

In an operation method of a merchant ship of the present invention, the merchant ship comprises:
a bulbous bow which is provided in a bow part;
an additional propeller which is provided in a ship bottom part, and
an additional-propeller-driving unit,
the method is characterized in that
a main propeller and the additional propeller are disposed so as to apply thrust forces when the merchant ship is in an unloaded state, and
when the merchant ship sails in a frozen sea area, the merchant ship has a draft line with which a lower part of the bulbous bow is located on a sea surface or an ice upper surface and the merchant ship sails by mainly using at least the additional propeller from the main propeller and the additional propeller.

The main propeller can also be used during breaking of ice.

When the ship sails at a high speed in a frozen sea area, a ship hull may be damaged if the ship collides with ice. Thus, a sailing at a low speed is required. When the main propeller which is driven by a main engine is positively used for the sailing at such a low speed, the main engine, which is usually selected on the assumption that the ship sails at a predetermined high speed in a general sea area, is driven such that an output should be suitable for the low speed. Thus, the energy efficiency is low.

On the other hand, when the ship sails in a frozen sea area using the additional propeller according to the present invention, since the additional-propeller-driving unit has a small size for the additional propeller, even the additional propeller can be used enough for the sailing at the low speed, which makes possible to operate the ship with a totally high efficiency.

An output of the additional-propeller-driving unit is, for example, 15 to 45%MCR (Maximum Continuous Rating), preferably 20 to 35%MCR of an output of the main engine.

In a general sea area (not a frozen sea area), in order to sail at a relatively high speed, for example, 15 to 19 knots, the main propeller can be rotated to sail at an increased speed. Thus, the main engine requires a large output.

On the other hand, it is necessary to sail at a low speed in a frozen sea area (because the ship hull would be damaged by collision with ice in a sailing at a high speed). The sailing speed is 5 knots or less, preferably 3 knots or less.

Therefore, it is preferable that the output of the additional-propeller-driving-unit for driving the additional propeller for a sailing at a low speed is 15 to 45%MCR of the output of the main engine.

In a frozen sea area, even in an unfrozen season (in the season when the freezing-up begins or in the season when ice is starting to melt), the risk of collision with ice cannot be completely eliminated. Thus, it is more preferred to drive the additional propeller to sail at a low speed rather than to rotate the main propeller.

When the ship sails at a low speed mainly using the additional propeller, the advantages of the present invention become more apparent in a frozen sea area in the unfrozen season or in the season when ice is melting (in the season when the freezing-up begins (for "early-stage ice") or in the season when ice is starting to melt) than in the season when the sea is frozen over a wide area so that a sea route cannot be found or in the season when the sea is covered with thick ice.

The "early-stage ice" described herein refers to ice that does not exist over one winter season. The merchant ship of the present invention is capable of safely sailing in a frozen sea area with the "early-stage ice".

Type of additional-propeller-driving unit includes an electric type and a mechanical type, and the electric type is preferred. A generator which generates power by driving of the main engine can be used. Electricity generated by an auxiliary generator may be used as the driving unit.

The additional propeller is desirably a variable-pitch propeller. The variable-pitch propeller has a significant advantage in that the adjustable range of a rotational driving force thereof is large, and continuous adjustment and fine adjustment of the driving force are possible.

There is proposed a mode in which the additional propeller is disposed in the ship bottom part at a position on a front side relative to the position of the main propeller and selectable between a state of being assembled at the outside of the merchant ship and a state of being retracted to the inside of the merchant ship.

When the additional propeller is not used (e.g., when the ship sails in a general sea area), since the additional propeller in the state of being assembled at the outside of the ship acts as a resistance, it is desired to retract the additional propeller to the inside of the ship.

The merchant ship is propelled by mainly driving the main propeller, in a loaded state in a season other than a frozen season, or in a sailing in a general sea area.

The additional propeller may be rotatable around a vertical shaft line. In driving of the additional propeller, the ship maneuverability (directional property) can be improved by appropriately rotating the additional propeller around the vertical shaft line.

The additional propeller may include a duct propeller. When the duct propeller is used for the additional propeller, it is possible to obtain a relatively large thrust even by the small sized duct propeller.

The lower part of the bulbous bow may break ice and laterally carry the broken ice away when the merchant ship sails in a frozen sea area.

A double bottom construction in a cargo part on a rear side relative to a watertight collision bulkhead desirably extends to the lower part of the bulbous bow which is located on the front side relative to the collision bulkhead.

In a merchant ship, generally, although the rear side relative to the watertight collision bulkhead has a double bottom construction because the rear side receives a cargo load, the front side relative to the collision bulkhead has no double bottom construction. However, it is assumed that, in a sailing in a frozen sea area, the merchant ship may collide with ice or run onto ice. Thus, in order to add a strength for bearing the impact to the merchant ship, the double bottom construction in the cargo part on the rear side relative to the collision bulkhead desirably extends to the lower part of the bulbous bow located on the front side relative to the collision bulkhead.

An additional ballast tank may be disposed on the front side relative to the watertight collision bulkhead, and ballast water may be charged into the ballast tank to increase a weight on a bow side during breaking of ice. After the merchant ship runs onto ice, ballast water may be charged into the ballast tank so that the ice can be broken by the weight. Accordingly, it is possible to improve an ice-breaking capacity.

An inner plate may be disposed above a bottom plate on the front side relative to the watertight collision bulkhead so that the lower part of the bulbous bow has a double bottom construction. Further, another inner plate may be disposed between the bottom plate and the inner plate to obtain a triple bottom construction.

In a structure in which a filler such as mortar is filled inside the double bottom construction or the triple bottom construction, for example, impact resistance when the ship collides with ice is increased and bending resistance of the shell when the ship runs onto ice is increased.

In an operation in an unloaded state, it is desired that the draft line 18 be located at the sea surface position or the position that contacts the ice upper surface in a frozen sea area while being located below the uppermost

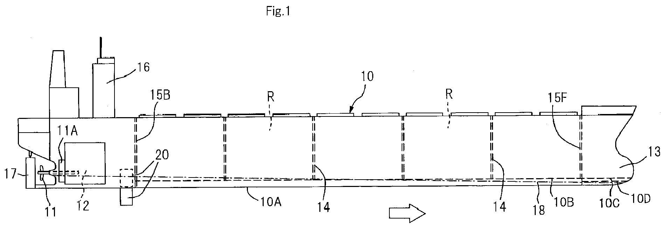

(highest) inner plate in the double bottom construction or the triple bottom construction as illustrated in Fig. 1.

In this case, it is desired that a reinforcing filler such as mortar be filled between the uppermost (highest)inner plate and the bottom plate in the double bottom construction or the triple bottom construction. For the purpose of reinforcement, the filler is preferably filled in contact with at least the bottom plate.

The merchant ship having the double bottom construction, or the triple bottom construction as described above desirably sails in a state in which the draft line in an unloaded state is located on the lower part of the bulbous bow, that is, on the front side relative to the collision bulkhead and also located below the uppermost (highest)inner plate in the double bottom construction or the triple bottom construction. The reason thereof is as follows.

First, the lower part of the bulbous bow is reinforced with the inner plate which forms the double bottom construction or the triple bottom construction. Thus, damage of the ship shell which would be caused by collision with ice is prevented.

Second, even if the bottom plate is damaged by collision with ice, the collision bulkhead having an extremely high strength is not damaged. Thus, there is no influence on cargo because of no water intrusion, and a sailing can be continued.

Third, when the reinforcing filler such as mortar is filled between the uppermost inner plate and the bottom plate in the double bottom construction or the triple bottom construction, the strength of the lower part of the bulbous bow is increased by the existence of the inner plate and the filler. Thus, it is possible to reduce the risk of damage caused by collision with ice.

In the mode in which the reinforcing filler such as mortar is filled, it is optimal that the draft line be located on the front side relative to the collision bulkhead in an operation in a frozen sea area from the above point of view.

Further, according to the present invention, it is possible to provide a merchant ship comprising
a bulbous bow which is provided in a bow part;
a main propeller which is provided in a stern part and driven by a main engine;
an additional propeller which is provided in a bottom part; and
an additional-propeller-driving unit,
the merchant ship being characterized in that
the main propeller and the additional propeller are disposed so as to apply thrust forces when the merchant ship is in an unloaded state,
a cargo part has a double bottom construction in which an inner bottom plate is provided inside relative to a bottom plate,
at the front side relative to a collision bulkhead, an inner plate of the bow part is provided so as to be located in a position of the inner bottom plate of the double bottom construction in the cargo part,
a ballast tank is formed above the inner plate of the bow part, and
a reinforcing filler is filled, in contact with at least the bottom plate, between the inner plate and the bottom plate of the bulbous bow.

### Advantageous Effects of Invention

As described above, according to the present invention, it is possible to operate a merchant ship with a high sailing energy efficiency in a frozen sea area.

### Brief Description of Drawings

Fig. 1 is a front view of the entire example of a merchant ship also illustrating a draft line during a sailing in a frozen sea area.
Fig. 2 is a schematic view of an additional propeller and an additional-propeller-driving unit thereof.
Fig. 3 is a cross-sectional view of the merchant ship.
Fig. 4 is a longitudinal-sectional view illustrating a bulbous bow.

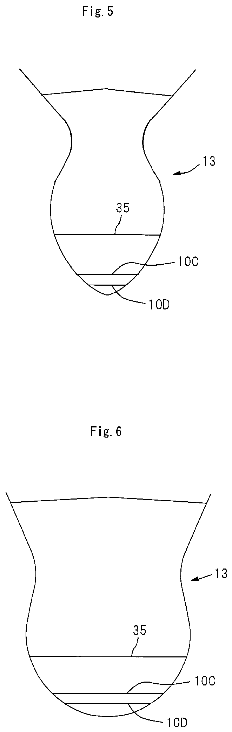

Fig. 5 is a view on arrow 5-5
Fig. 6 is a view on arrow 6-6.

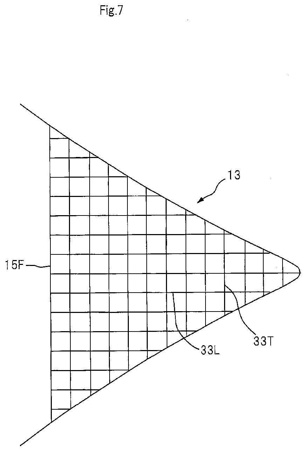

Fig. 7 is a plan view of the bottom of the bulbous bow.
Fig. 8 is a longitudinal-sectional view illustrating another filling mode of a filler.
Fig. 9 is a schematic view of another additional propeller arrangement mode.
Fig. 10 is a front view of the entire example of the merchant ship also illustrating a draft line during a loaded sailing in a general sea area.
Fig. 11 is a front view of the entire example of the merchant ship also illustrating a draft line during an unloaded sailing in a general sea area.

### Description of Embodiments

Hereinbelow, an embodiment of the present invention will be described in detail with reference to the accompanying drawings.

Fig. 1 is a schematic front view of a ship according to the present embodiment, for example, a merchant ship 10 intended for loading such as a cargo ship (the example of Fig. 1 illustrates an ore carrier). The merchant ship 10 obtains a propulsion power by driving a main propeller 11 by a main engine 12 such as a diesel engine.

The merchant ship 10 includes a bulbous bow 13 for reducing a wave-making resistance in a bow part thereof. A known example can be employed as the shape of the bulbous bow 13.

The illustrated merchant ship 10 is a cargo ship which includes a cargo compartment for cargo R. In the illustrated example, the merchant ship 10 includes five cargo compartments. The cargo compartments are partitioned from each other by transverse bulkheads 14 in a ship length direction. The foremost cargo compartment is partitioned by a collision bulkhead (watertight bulkhead) 15F. The rearmost cargo compartment is partitioned by an afterpeak bulkhead (watertight bulkhead) 15B.

Further, the merchant ship 10 is provided with a bridge 16 and a rudder 17 on the stern side.

Fig. 1 illustrates a draft line 18 for a sailing in an unloaded state in a frozen sea area. Fig. 1 illustrates a state of "trim by the stern" in which the draft line 18 is shallow in the bow direction and deep in the stern part.

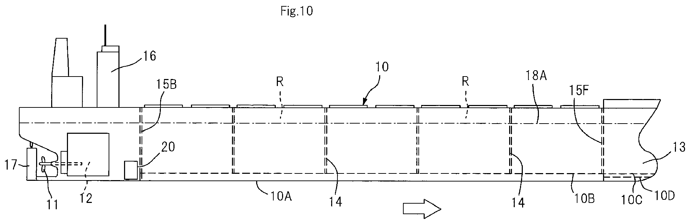

As illustrated in Fig. 10, a draft line 18A in a loaded state is deep.

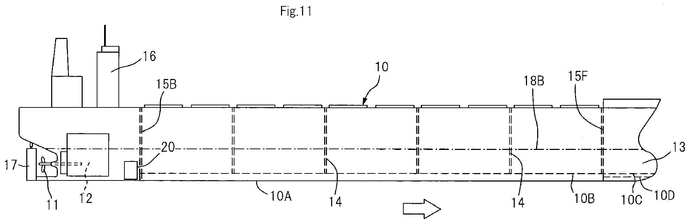

As illustrated in Fig. 11, a normal draft line, in a case where ballast water is put in right and left ballast tanks BT in an unloaded state in an unfrozen sea area, is located at, for example, the position of 18B.

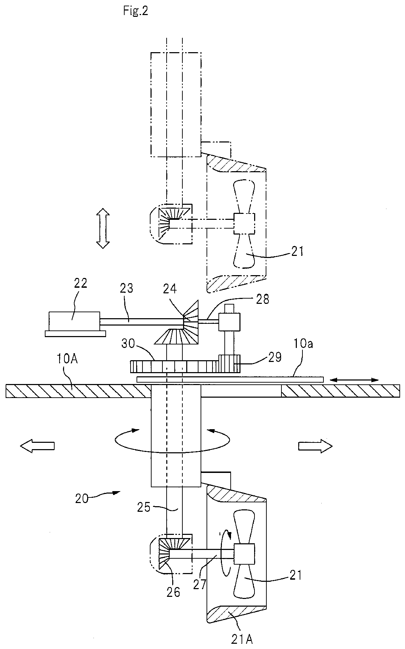

As illustrated also in Fig. 2, the ship is provided with an additional propeller 20 and an additional-propeller-driving unit 22. For example, a duct propeller 21, which is provided with a propeller inside a duct 21A, can be used for the additional propeller 20.

The additional propeller 20 is disposed at a position different from the position of the main propeller 11 in a ship bottom part.

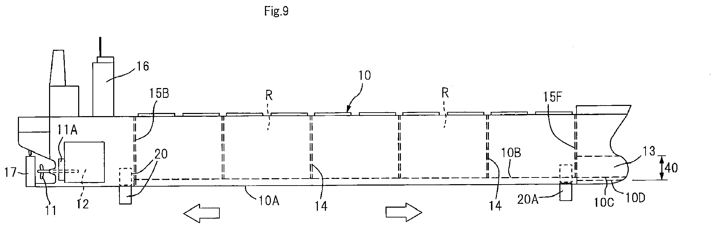

In this case, the additional propeller 20 is desirably disposed at a stern side position relative to the middle. However, as illustrated in Fig. 9, an additional propeller 20A may be disposed at a bow side position relative to the middle. In this case, although the additional propeller 20A may be installed in addition to the additional propeller 20 disposed at the stern side position, only the additional propeller 20A may be installed at the bow side position relative to the middle.

An output of the additional-propeller-driving unit 22 for the additional propeller 20 is desirably 15 to 45%MCR, more preferably 20 to 35%MCR of an output of a driving unit for the main engine 12.

A designed operating state in which the main propeller 11 is driven to obtain the propulsion power, a driving state in which the additional propeller 20 is driven to obtain the propulsion power, and a driving state in which the main propeller 11 and the additional propeller 20 are both driven to, for example, run onto ice are selectable.

An electric motor or a hydraulic motor may be used as the additional-propeller-driving unit 22. In addition, when necessary, the additional-propeller-driving unit 22 may be electrically coupled to the main engine 12 to obtain a driving force.

In particular, it is optimal that a generator be driven by the main engine 12 to rotate an electric motor to rotate the main propeller and the additional propeller 20.

In the illustrated example, a rotational driving force of an output shaft 23 by the driving unit 22 is transmitted to a vertical shaft 25 through a pair of bevel gears 24 and transmitted as a rotating force for a propeller drive shaft 27 through a pair of bevel gears 26 which is disposed on the vertical shaft 25 to rotate the duct propeller 21 which is provided with the duct 21A around the propeller.

On the other hand, a rotational driving force of a transmission shaft 28 by the driving unit 22 is transmitted to a drive pinion 29 and a gear wheel 30 which meshes with the drive pinion 29 so as to rotate the duct propeller 21 around the vertical shaft 25.

As illustrated in Fig. 2, a device including the duct propeller 21 below a bottom plate 10A is in a state of being assembled at the outside of the bottom plate 10A, which becomes an obstacle in a normal sailing. Thus, the device is preferably configured to be retractable to the inside of the ship. The merchant ship 10 includes a shielding member 10a that shuts after the device is retracted to the inside of the ship.

As illustrated in Fig. 10, the merchant ship 10 having the above ship structure is operated in a draft state close to a designed full load draft by driving the main propeller 11 by the main engine 12 in a sailing in a general sea area (an unfrozen sea area) or in an unfrozen season when loaded with the cargo R.

After the merchant ship 10 passes an area of the Arctic Ocean and a sea areas adjacent thereto, calls at a port, and unloads the cargo, there is little need to excessively strictly make the ship stable during a sailing, in particular, on a calm weather day or in calm seas. Thus, in a manner similar to the case of Fig. 1, the merchant ship 10 is caused to travel by the additional propeller 20 having a small size with a lowered draft line. In this case, a traveling direction of the merchant ship 10 can be appropriately selected. The bow and the stern of the ship are monitored in the bridge 16 according to the traveling direction of the ship. For example, in addition to traveling in the bow direction as illustrated in Fig. 1, the merchant ship 10 can travel in the stern direction as illustrated in Fig. 9. Further, in Fig. 9, the small sized additional propeller 20A is disposed on the bow side relative to the middle of the ship hull.

An apparent displacement is reduced by lowering the draft line, which reduces a contact area between the outer plate and water. Thus, it is possible to improve a waterplane area coefficient and increase an effect of reducing fuel consumption.

Further, since the small sized additional propeller 20 is driven, a low output of the additional-propeller-driving unit 22 is enough. Thus, the merchant ship 10 can sail with an output of approximately 15 to 45%MCR of the output of the driving unit for the main engine 12. Also, from this point of view, it is possible to increase the effect of reducing fuel consumption. A traveling speed of approximately 5 to 10 knots is enough on a calm weather day (a day with 0 to 3 in the Beaufort scale).

When the merchant ship 10 leaves a port after fully loaded with the cargo R and shifts to a normal sailing, the main propeller 11 is driven or additionally used so that the merchant ship 10 sails with a deep draft.

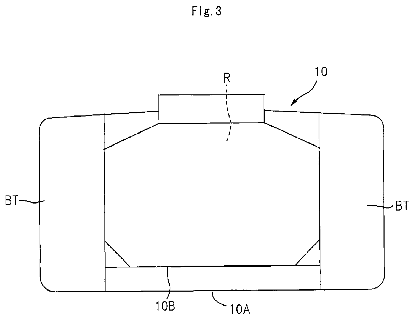

When the weather is bad, even in the merchant ship 10 without cargo, for example, ballast water is put in the ballast tanks BT which are disposed on right and left of the cargo compartment of Fig. 3 so that the merchant ship 10 has, for example, the draft line 18B illustrated in Fig. 11. Accordingly, it is possible to cause the merchant ship 10 to travel by the small sized additional propeller 20 or the main propeller 11 in a stabilized state.

When the duct propeller 21 is rotatable around a vertical shaft line, it is possible to propel the merchant ship 10 also in the stern direction by driving the duct propeller 21 according to a required driving state.

When the duct propeller 21 is rotatable around the vertical shaft 25 (vertical shaft line), in driving by a combined use of the additional propeller and the main propeller, it is possible to add a steering function to improve a maneuverability (directional property) by appropriately rotating the additional propeller around the vertical shaft line. Further, the duct propeller 21 can be oriented sideways so as to be utilized as a side thruster when the merchant ship 10 is docked at a port.

A propulsive direction by the duct propeller 21 may be set to the bow direction. Thus, the main propeller 11 may be provided with a propeller idling prevention device 11A for preventing the main propeller 11 from rotating.

When necessary, the duct propeller 21 may be disposed on each of right and left of a center line of the ship. The maneuverability can be improved by rotations of the right and left duct propellers 21, 21 around the respective vertical shaft line thereof. Further, when the right and left duct propellers 21, 21 are used as side thrusters, it is easier for the merchant ship 10 to dock at the port.

The present invention enables the merchant ship 10 to sail also in a frozen sea area.

Thus, various measures are taken.

Desirably, one of the measures is that a double bottom construction, which includes the bottom plate 10A and an inner bottom plate 10B disposed on the inner side of the bottom plate 10A in a cargo part located on the rear side relative to the watertight collision bulkhead 15F, extends to a lower part of the bulbous bow 13 in front so that the bulbous bow 13 has a double bottom construction, which includes the bottom plate 10A and an inner plate 10C.

In a conventional merchant ship 10, although the rear side relative to the watertight collision bulkhead 15F has a double bottom construction because the rear side receives a cargo load, the front side relative to the collision bulkhead 15F has no double bottom construction.

However, it is assumed that, in a sailing in a frozen sea area, the merchant ship 10 may collide with ice or run onto ice. Thus, in order to add a strength for bearing the impact to the merchant ship 10, the double bottom construction in the cargo part on the rear side relative to the collision bulkhead 15F desirably extends to the lower part of the bulbous bow 13 in front.

An additional ballast tank 38 for charging and discharging ballast water, which is made of, for example, FRP, may be disposed on the front side relative to the watertight collision bulkhead 15F. After the merchant ship 10 runs onto ice when breaking the ice, ballast water can be charged into the ballast tank 38 to increase the weight on the bow side to break the ice. Accordingly, it is possible to improve an ice-breaking capacity.

In the illustrated example, the ballast tank 38 is disposed above the inner plate 10C. A ballast tank 39 may be further disposed above the ballast tank 38 as needed.

In the embodiment, the inner plate 10C is provided for reinforcement. In order to prepare for a water intrusion accident through the bottom plate 10A and obtain a higher strength, a reinforcing horizontal partition plate 10D may be disposed between the inner plate 10C and the bottom plate 10A to obtain a triple bottom construction.

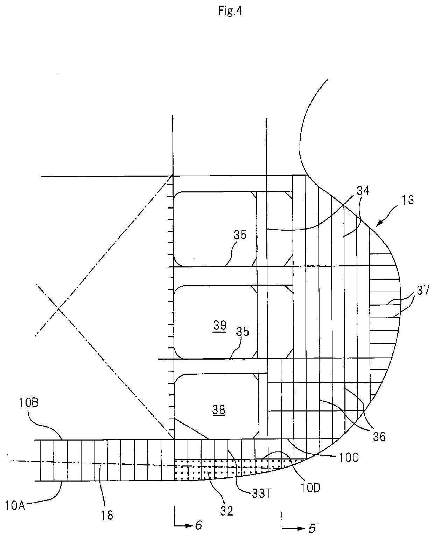

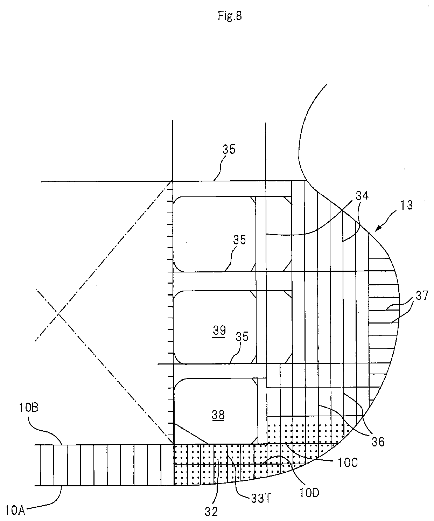

Further, a structure in which a filler 32 such as mortar is filled under the ice-breaking tank 38 (refer to Figs. 4 and 8) may be employed. The structure in which the filler 32 such as mortar is filled under the ballast tank increases, for example, impact resistance when the merchant ship 10 collides with ice or impact resistance when the merchant ship 10 runs onto ice.

The filler 32 may be filled at any position above the bottom plate 10A. In addition to the position between the bottom plate 10A and the reinforcing horizontal partition plate 10D in the illustrated example, the filler 32 may be further filled up to the inner plate 10C as illustrated in Fig. 8. Further, the filler 32 may be filled up to a position above the inner plate 10C as illustrated in Fig. 8.

The filling of the filler 32 increases not only the impact resistance of the bottom plate 10A, but also the ice-breaking capacity due to the weight of the filler 32 itself.

Instead of mortar, another filler that makes direct contact with the bottom plate 10A and covers the bottom plate 10A may also be used as the filler 32. Examples of the filler include various inorganic fillers, a metal filler such as a casting, a plastic filler, and a combination thereof.

When the merchant ship 10 sails in a frozen sea area or sea areas adjacent thereto, it is also necessary to increase the strength of the front face side of the bulbous bow 13 due to a possibility of an unexpected collision with ice in addition to increasing the strength of the lower part of the bulbous bow 13.

Thus, as illustrated, it is desirable to additionally provide bottom transverses 33T, bottom lounges 33L, longitudinal frames 34, panting stringers 35, vertical frames 36, and breast hooks 37 which horizontally and vertically connect the bottom plate 10A and the inner plate 10C.

### Industrial Applicability

According to the present invention, as a merchant ship, including a general cargo ship, a container ship, an oil tanker, a chemical tanker, an ore carrier, a coal ship, a liquefied natural gas carrier, a liquefied petroleum gas carrier, a car carrier, or a bulk carrier, can stably sail not only in a general sea area, but also in a frozen sea area or in a frozen sea area in an unfrozen season. As a result, the ship can sail not in a roundabout way for avoiding ice, but in the shortest course. Thus, an economic value thereof is extremely high.

For example, the ship can sail between the North Pacific Ocean and the North Atlantic Ocean through the Arctic Ocean. In particular, enabling the ship to pass through the Arctic Ocean in which the frozen area tends to decrease with global warming in recent years produces a large economic effect.

### Reference Signs List

- 10: ship
- 10A: bottom plate
- 10B: inner bottom plate
- 10C: inner plate
- 10D: reinforcing horizontal partition plate
- 11: main propeller
- 12: main engine
- 20: additional propeller
- 21: duct propeller
- 22: additional-propeller-driving unit
- 32: filler

## Claims

1. An operation method of a merchant ship, the merchant ship comprising:
a bulbous bow which is provided in a bow part;
a main propeller which is provided in a stern part and driven by a main engine;
an additional propeller which is provided in a bottom part; and
an additional-propeller-driving unit,
the operation method being **characterized in that**
the main propeller and the additional propeller are disposed so as to apply thrust forces when the merchant ship is in an unloaded state,
a cargo part has a double bottom construction in which an inner bottom plate is provided inside relative to a bottom plate,
at the front side relative to a collision bulkhead, an inner plate of the bow part is provided so as to be located in a position of the inner bottom plate of the double bottom construction in the cargo part,
a ballast tank is formed above the inner plate of the bow part,
a reinforcing filler is filled, in contact with at least the bottom plate, between the inner plate and the bottom plate of the bulbous bow, and
when the merchant ship sails in a frozen sea area, the merchant ship has a draft line with which a lower part of the bulbous bow is located on a sea surface or an ice upper surface and the merchant ship sails by using at least the additional propeller from the main propeller and the additional propeller.

2. The operation method of the merchant ship according to claim 1, **characterized in that** an output of the additional-propeller-driving unit is 15 to 45%MCR (20 to 35%MCR) of an output of the main engine.

3. The operation method of the merchant ship according to claim 1, **characterized in that** the additional propeller is disposed in the bottom part at a position on a front side relative to the position of the main propeller and selectable between a state of being assembled at the outside of the merchant ship and a state of being retracted to the inside of the merchant ship.

4. The operation method of the merchant ship according to claim 1, **characterized in that** the merchant ship in a loaded state is propelled by mainly driving the main propeller in a season other than a frozen season.

5. The operation method of the merchant ship according to claim 1, **characterized in that** the additional propeller is rotatable around a vertical shaft line.

6. The operation method of the merchant ship according to claim 1, **characterized in that** the additional propeller comprises a duct propeller.

7. The operation method of the merchant ship according to claim 1, **characterized in that** the lower part of the bulbous bow breaks ice and laterally carries the broken ice away when the merchant ship sails in a frozen sea area.

8. The merchant ship comprising:
a bulbous bow which is provided in a bow part;
a main propeller which is provided in a stern part and driven by a main engine;
an additional propeller which is provided in a bottom part; and
an additional-propeller-driving unit,
the merchant ship being **characterized in that**
the main propeller and the additional propeller are disposed so as to apply thrust forces when the merchant ship is in an unloaded state,
a cargo part has a double bottom construction in which an inner bottom plate is provided inside relative to a bottom plate,
at the front side relative to a collision bulkhead, an inner plate of the bow part is provided so as to be located in a position of the inner bottom plate of the double bottom construction in the cargo part,
a ballast tank is formed above the inner plate of the bow part,
a reinforcing filler is filled, in contact with at least the bottom plate, between the inner plate and the bottom plate of the bulbous bow.

9. The merchant ship according to claim 8, **characterized in that** a triple bottom construction is provided between the inner plate and the bottom plate of the bulbous bow.
